# EUROPÄISCHE PATENTANMELDUNG

(11) **EP 1 416 181 A2**
(43) Veröffentlichungstag der Anmeldung: **06.05.2004**
(21) Anmeldenummer: 03022021.4
(22) Anmeldetag: 01.10.2003
(51) Int. Cl.: F16D 13/70, F16D 13/75

(54) **Druckplattenbaugruppe für eine Reibungskupplung**

(30) Priorität: 09.10.2002 DE 10247013
(71) Anmelder: ZF Sachs AG, 97424 Schweinfurt (DE)
(72) Erfinder: Weidinger, Reinhold, Dipl.-Ing .(FH), 97509 Unterspiesheim (DE)

(57) **Zusammenfassung**

Eine Druckplattenbaugruppe für eine Reibungskupplung umfasst eine Gehäuseanordriung (12), eine in der Gehäuseanordnung (12) vorgesehene und mit dieser um eine Drehachse drehbare Anpressplatte (16), eine Kraftbeaufschlagungsanordnung (22), vorzugsweise Kraftspeicher, welche bezüglich der Gehäuseanordnung (12) der Anpressplatte (16) abstützbar ist, eine Verschleißnachstellvorrichtung (28) im Kraftübertragungsweg zwischen der Kraftbeaufschlagungsanordnung (22) und der Anpressplatte (16), umfassend wenigstens ein zur Verschleißnachstellung bewegbares Verschleißnachstellelement (32), wobei dem wenigstens einen Verschleißnachstellelement (32) ein Stellelement (52) zugeordnet ist, welches bei Durchführung einer Stellbewegung das wenigstens eine Verschleißnachstellelement (32) zur Durchführung einer Verschleißnachstellung zur Bewegung antreibt, wobei das dem wenigstens einen Verschleißnachstellelement (32) zugeordnete Stellelement (52) durch Fliehkrafteinwirkung zur Durchführung einer Stellbewegung beaufschlagbar ist.

## Beschreibung

Die vorliegende Erfindung betrifft eine Druckplattenbaugruppe für eine Reibungskupplung, umfassend eine Gehäuseanordnung, eine in der Gehäuseanordnung vorgesehene und mit dieser um eine Drehachse drehbare Anpressplatte, eine Kraftbeaufschlagungsanordnung, vorzugsweise Kraftspeicher, welche bezüglich der Gehäuseanordnung der Anpressplatte abstützbar ist, eine Verschleißnachstellvorrichtung im Kraftübertragungsweg zwischen der Kraftbeaufschlagungsanordnung und der Anpressplatte, umfassend wenigstens ein zur Verschleißnachstellung bewegbares Verschleißnachstellelement.

Bei Druckplattenbaugruppen, in welchen die Verschleißnachstellvorrichtung selbsttätigt zur Kompensation von Verschleiß wirksam ist, ist im Allgemeinen vorgesehen, dass das wenigstens eine Verschleißnachstellelement durch irgendwelche Vorspanneinrichtungen, im Allgemeinen Vorspannfedern, zur Bewegung in einer Richtung vorgespannt ist, in welcher bei Aufheben einer Blockierwirkung durch dieses Verschleißnachstellelement in bestimmten Zuständen dann eine Verschleißkompensation erfolgt. Um dafür zu sorgen, dass das Verschleißnachstellelement dieser Vorspannung folgend nur in bestimmten Zuständen eine Verschleißkompensation durchführen kann, sind Vorkehrungen bereitzustellen, die dafür sorgen, dass in Phasen, in welchen keine Verschleißnachstellung erfolgen soll, das wenigstens eine Verschleißnachstellelement sich auch nicht bezüglich der Anpressplatte verlagern kann. Hierzu ist es beispielsweise bekannt, Blattfederelemente einzusetzen, die einerseits dazu dienen können, den Verschleiß bzw. das Auftreten von Verschleiß zu sensieren, die andererseits jedoch auch die Funktion haben, durch ihre Federvorspannung dafür zu sorgen, dass in Phasen, in welchen kein Verschleiß aufgetreten ist bzw. ein bereits aufgetretener Verschleiß wieder kompensiert worden ist, das Verschleißnachstellelement sich nicht verlagert. Die durch ein derartiges Element, beispielsweise Blattfederelement, bereitgestellte Gegenkraft muss ausreichend groß sein, um der auf das wenigstens eine Nachstellelement einwirkenden Vorspannkraft auch dann entgegenwirken zu können, wenn beispielsweise in dem System Vibrationen auftreten. Insbesondere dann, wenn ein derartiges Element gleichzeitig auch die Funktion eines Verschleißerfassungselements übernimmt, kann jedoch durch das Bereitstellen desselben mit ausreichend großer Federsteifigkeit das Verschleißerfassungsverhalten und ggf. sogar das gesamte Kupplungsverhalten beeinträchtigt werden.

Es ist die Aufgabe der vorliegenden Erfindung, eine Druckplattenbaugruppe für eine Reibungskupplung vorzusehen, bei welcher bei Bereitstellung einer automatisiert wirkenden Verschleißnachstellfunktion eine nachteilhafte Auswirkung auf das Kupplungsverhalten nicht vorhanden ist.

Erfindungsgemäß wird diese Aufgabe gelöst durch eine Druckplattenbaugruppe für eine Reibungskupplung, umfassend eine Gehäuseanordnung, eine in der Gehäuseanordnung vorgesehene und mit dieser um eine Drehachse drehbare Anpressplatte, eine Kraftbeaufschlagungsanordnung, vorzugsweise Kraftspeicher, welche bezüglich der Gehäuseanordnung der Anpressplatte abstützbar ist, eine Verschleißnachstellvorrichtung im Kraftübertragungsweg zwischen der Kraftbeaufschlagungsanordnung und der Anpressplatte, umfassend wenigstens ein zur Verschleißnachstellung bewegbares Verschleißnachstellelement, wobei dem wenigstens einen Verschleißnachstellelement ein Stellelement zugeordnet ist, welches bei Durchführung einer Stellbewegung das wenigstens eine Verschleißnachstellelement zur Durchführung einer Verschleißnachstellung zur Bewegung antreibt, wobei das dem wenigstens einen Verschleißnachstellelement zugeordnete Stellelement durch Fliehkrafteinwirkung zur Durchführung einer Stellbewegung beaufschlagbar ist.

Bei der erfindungsgemäßen Druckplattenbaugruppe ist also keine permanente Vorspannung für ein Verschleißnachstellelement zur Durchführung einer Verschleißnachstellbewegung vorhanden. Vielmehr wird unter Fliehkrafteinwirkung dann, wenn eine Verschleißnachstellung bzw. eine Verschleißkompensation erfolgen soll, ein Stellelement zur Durchführung einer Stellbewegung gebracht, wobei dieses Stellelement dann bei Durchführung seiner Stellbewegung das zugeordnete Verschleißnachstellelement antreibt und somit dafür sorgt, dass ein zuvor sensierter Verschleiß kompensiert wird.

Um eine sichere und stabile Wechselwirkung zwischen dem wenigstens einen Verschleißnachstellelement und dem diesem zugeordneten Stellelement vorsehen zu können, wird vorgeschlagen, dass das Stellelement eine Stellverzahnung aufweist, die zur Durchführung einer Verschleißnachstellung in Kämmeingriff mit einer Gegen-Stellverzahnung an dem zugeordneten Verschleißnachstellelement oder einem damit gekoppelten Stellkraftübertragungselement steht. Um dafür sorgen zu können, dass das Stellelement wiederholt in einem Zustand gelangt, ausgehend von welchem es die vorangehend angesprochene Stellbewegung durchführen kann, wird vorgeschlagen, dass der Kämmeingriff der Stellverzahnung mit der Gegen-Stellverzahnung lösbar ist.

Bei der erfindungsgemäßen Druckplattenbaugruppe ist vorzugsweise vorgesehen, dass das Stellelement an der Anpressplatte schwenkschiebbar getragen ist. Durch diese Schwenkschiebbarkeit wird es möglich, dass in einer ersten Schiebeendlage die Stellverzahnung in Eingriff mit der Gegen-Stellverzahnung steht, und dass in einer zweiten Schiebeendlage die Stellverzahnung außer Eingriff mit der Gegen-Stellverzahnung ist. Dabei kann beispielsweise vorgesehen sein, das Stellelement durch Schwerkrafteinwirkung oder/und Federvorspannung von der ersten Schiebeendlage in die zweite Schiebeendlage bringbar ist.

Wie vorangehend bereits erwähnt, ist es ein Ziel der vorliegenden Erfindung, dafür zu sorgen, dass im Allgemeinen keine das Verschleißnachstellelement zur Durchführung einer Nachstellbewegung beaufschlagende Krafteinwrikung vorhanden ist, sondern dass nur dann, wenn tatsächlich Verschleiß zu kompensieren ist, entsprechende Maßnahmen ergriffen werden und entsprechende Kräfte erzeugt werden. Um dies weiter zu unterstützen, wird vorgeschlagen, dass eine Arretiereinrichtung vorgesehen ist, welche eine Bewegung des Stellelements von der ersten Schiebeendlage zur zweiten Schiebeendlage nur nach Auftreten von Verschleiß zulässt. Hierzu kann beispielsweise vorgesehen sein, dass die Arretiereinrichtung einen Arretierabschnitt an dem Stellelement umfasst, welcher bei Auftreten von Verschleiß freigebbar ist und bei nicht vorhandenem Verschleiß und bei kompensiertem Verschleiß durch eine Klemmanordnung zur Arretierung des Stellelements in der ersten Schiebeendlage klemmbar ist. Auf diese Art und Weise wird sichergestellt, dass nur dann, wenn tatsächlich Verschleiß aufgetreten und erfasst worden ist, das Stellelement in einen Zustand gelangt, in welchem es dann unter Fliehkrafteinwirkung eine Stellbewegung durchführen kann und dabei das zugeordnete Verschleißnachstellelement zur Durchführung einer Nachstellbewegung antreiben kann.

Weiter kann bei der erfindungsgemäßen Druckplattenbaugruppe vorgesehen sein, dass das Stellelement durch Fliehkrafteinwirkung von der zweiten Schiebeendlage in die erste Schiebeendlage bringbar ist.

Um das Stellelement in einen Zustand zu bringen, ausgehend aus welchem es nachfolgend die Stellbewegung durchführen kann, kann vorgesehen sein, dass in der oder/und bei Übergang in die zweite Schiebeendlage das Stellelement in eine Stellbewegungsvorbereitungsschwenklage verschwenkbar ist. Hier kann vorzugsweise vorgesehen sein, dass das Stellelement durch Schwerkrafteinwirkung oder/und Federvorspannung in die Stellbewegungsvorbereitungsschwenklage verschwenkbar ist. Ausgehend von der Stellbewegungsvorbereitungsschwenklage kann dann durch Fliehkrafteinwirkung das Stellelement zur Durchführung einer Stellbewegung in Richtung Stellbewegungsendschwenklage verschwenkt werden. Bei dieser Verschwenkung treibt dann das Stellelement das zugeor dnete Verschleißnachstellelement zur Durchführung einer Nachstellbewegung an.

Um in einer Reibungskupplung, bei welcher eine erfindungsgemäße Druckplattenbaugruppe vorgesehen ist, den beispielsweise im Bereich von Reibbelägen einer Kupplungsscheibe aufgetretenen Verschleiß sensieren zu können, wird vorgeschlagen, dass an der Anpressplatte wenigstens ein Verschleißerfassungselement vorgesehen ist, welches bei Auftreten von Verschleiß wenigstens bereichsweise bezüglich der Anpressplatte verlagerbar ist.

Da dieses Verschleißerfassungselement also ein Bauteil ist, das dann bezüglich der Anpressplatte eine bestimmte Bewegung durchführt, wenn tatsächlich Verschleiß auftritt, kann bei einer vorteilhaften Weiterbildung der Erfindung vorgesehen sein, dass das Verschleißerfassungselement wenigstens einen Teil der Klemmanordnung bildet. Das Verschleißerfassungselement übernimmt also eine Doppelfunktion.

Dem Verschleißerfassungselement kann ein Blockierelement zugeordnet sein, welches nach Auftreten von Verschleiß und wenigstens bereichsweiser Verlagerung des Verschleißerfassungselements bezüglich der Anpressplatte ein Zurückbewegen des Verschleißerfassungselements bezüglich der Anpressplatte wenigstens teilweise verhindert. Beispielsweise kann das Blockierelement als keilartiger Blockierschieber ausgebildet sein. Um auch in diesem Bereich einen möglichst einfachen konstruktiven Aufbau bereitstellen zu können, wird vorgeschlagen, dass das Stellkraftübertragungselement das Blockierelement bildet.

Die erfindungsgemäße Druckplattenbaugruppe kann derart ausgebildet sein, dass das Verschleißerfassungselement das Auftreten von Verschleiß durch Zusammenwirken mit einem an der Gehäuseanordnung vorgesehenen Gegen-Erfassungsbereich erfasst. Alternativ ist es möglich, das Verschleißerfassungselement das Auftreten von Verschleiß durch Zusammenwirken mit einem an der Kraftbeaufschlagungsanordnung vorgesehenen Gegen-Erfassungsbereich erfasst.

Die vorliegende Erfindung betrifft ferner eine Reibungskupplung mit einer erfindungsgemäßen Druckplattenbaugruppe.

Nachfolgend wird mit Bezug auf die beiliegenden Figuren die vorliegende Erfindung detailliert beschrieben. Es zeigt:
- Fig. 1: eine perspektivische Teilansicht wesentlicher Komponenten einer erfindungsgemäßen Druckplattenbaugruppe;
- Fig. 2: eine Axialansicht der in Fig. 1 dargestellten Anordnung;
- Fig. 3: eine Schnittansicht einer die in den Fig. 1 und 2 gezeigte Anordnung aufweisenden Druckplatte, geschnitten längs einer Line III-III in Fig. 2;
- Fig. 4: eine Schnittansicht der in den Fig. 1 und 2 gezeigten Anordnung, geschnitten längs einer Linie IV-IV in Fig. 2,
- Fig. 5: eine vergrößerte Ansicht des in dem Kreis V in Fig. 2 enthaltenen Details;
- Fig. 6: eine Seitenansicht eines Stellelements;
- Fig. 7: eine Draufsicht auf das in Fig. 6 gezeigte Stellelement;
- Fig. 8: eine der Fig. 1 entsprechende Ansicht, bei welcher die Anordnung in einem zur Durchführung einer Verschleißkompensa- tion bereiten Zustand dargestellt ist;
- Fig. 9: eine Axialansicht der in Fig. 8 gezeigten Anordnung;
- Fig. 10: vergrößert das im Kreis X in Fig. 9 enthaltene Detail;
- Fig. 11: eine der Fig. 1 entsprechende Ansicht einer alternativen Ausgestaltungsform;
- Fig. 12: eine Schnittansicht der in Fig. 11 gezeigten Anordnung, geschnitten längs einer Linie XII-XII;
- Fig. 13: eine Schnittansicht einer die in Fig. 11 gezeigte Anordnung aufweisenden Druckplatte, geschnitten längs einer Linie XIII-XIII in Fig. 11;
- Fig. 14: eine Axialansicht der in Fig. 11 gezeigten Anordnung.

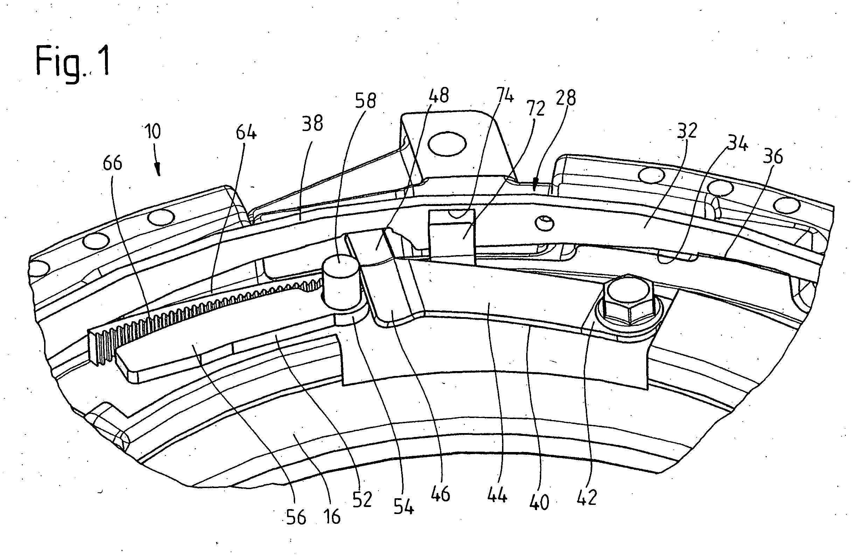

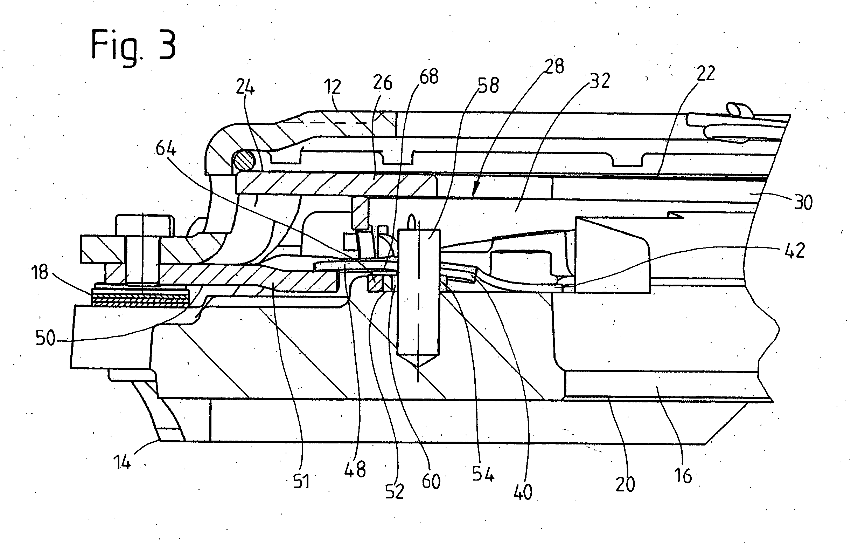

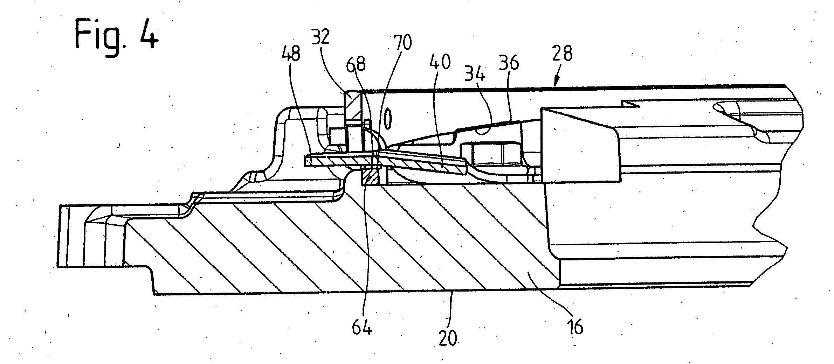

In den Fig. 1 bis 10 ist eine erste Ausgestaltungsform einer erfindungsgemäßen Druckplattenbaugruppe gezeigt. Der grundsätzliche Aufbau dieser Druckplattenbaugruppe wird nachfolgend mit Bezug auf die Fig. 3 erläutert.

Diese Druckplattenbaugruppe 10 umfasst ein Gehäuse 12, das im Wesentlichen topfartig ausgebildet ist und in einem axialen Endbereich 14 mit einem Schwungrad, beispielsweise Zwei-Massen-Schwungrad, fest verbunden werden kann. Im Gehäuse 12 ist eine Anpressplatte 16 vorgesehen, die in ihrem radial äußeren Bereich beispielsweise durch Tangentialblattfedern 18 oder andersartige Koppelanordnungen mit dem Gehäuse 12 im Wesentlichen drehfest, bezüglich diesem jedoch in Richtung einer Drehachse verlagerbar gehalten ist. Die Anpressplatte 16 stellt eine Reibfläche 20 bereit. Ein Kraftspeicher 22 bildet eine Kraftbeaufschlagungsanordnung, durch welche die Anpressplatte 16 zur Durchführung von Einrückvorgängen in Richtung auf das nicht dargestellte Schwungrad zu beaufschlagbar ist. Der Kraftspeicher 22 stützt sich im dargestellten Beispiel einer gezogenen Kupplung in seinem radial äußeren Bereich 24 bezüglich des Gehäuses 12 ab und beaufschlagt in einem radial weiter innen gelegenen Bereich 26 über eine nachfolgend detaillierter erläuterte Verschleißnachstellvorrichtung 28 die Anpressplatte 16. Am radial inneren Bereich 30 des Kraftspeichers 22 kann ein Ausrückermechanismus ziehend angreifen. Es sei darauf hingewiesen, dass selbstverständlich als Kraftbeaufschlagungsanordnung auch eine Einrückkraftübertragungshebelanordnung zum Einsatz gelangen kann, auf welche durch einen Einrückermechanismus eine entsprechende Betätigungskraft übertragen wird, um die Anpressplatte 16 in Richtung auf das Schwungrad zu zu pressen.

Bei der in Fig. 1 dargestellten Ausgestaltungsform umfasst die Verschleißnachstellvorrichtung 28 als wesentliche Komponente einen zur Drehachse im Wesentlichen konzentrisch angeordneten Verschleißnachstellring. Dieser weist an seiner der Anpressplatte zugewandt positionierten Seite eine Mehrzahl von in Umfangsrichtung aufeinander folgend angeordneten Keiloder Rampenflächen 34 auf, die an entsprechenden Gegen-Rampenflächen 36 der Anpressplatte 16 aufliegen. Eine Verdrehung des Nachstellrings 32 bezüglich der Anpressplatte 16 führt dazu, dass durch Verschieben der Rampenflächen 34 bezüglich der Gegen-Rampenflächen 36 die durch den Kraftspeicher 22 beaufschlagte Seite 38 des Nachstellrings 32 sich axial bezüglich der Reibfläche 20 der Anpressplatte 16 verlagert. Somit kann eine entsprechende Dickenabnahme im Bereich von Reibbelägen einer nicht dargestellten Kupplungsscheibe kompensiert werden.

An der Anpressplatte 16 ist ferner ein blattfederartiges Verschleißerfassungselement 40 vorgesehen. Dieses ist in einem Umfangsendbereich 42 an der Anpressplatte 16 festgelegt und erstreckt sich mit einem Körperabschnitt 44 im Wesentlichen in Umfangsrichtung an der Innenseite des Nachstellrings 32. Ein am anderen Endbereich 46 ausgebildeter Erfassungsabschnitt 48 erstreckt sich unter dem Nachstellring 32 hindurch nach radial außen und überlappt sich dort in radial Richtung und in Umfangsrichtung mit einem am Gehäuse 12 durch Verschraubung oder dergleichen getragenen Gegen-Erfassungselement 50. Dieses ist hier beispielsweise als Platte 51 ausgebildet. Bewegt sich die Anpressplatte 16, bedingt durch den aufgetretenen Verschleiß, in axialer Richtung bezüglich des Gehäuses 12, so kann der Erfassungsabschnitt 48 am Gegen-Erfassungselement 50 hängen bleiben, so dass das Erfassungselement 40 zumindest mit seinem Endbereich 46 axial bezüglich der Anpressplatte 16 bewegt wird, nämlich in Richtung von der Anpressplatte 16 weg bewegt wird.

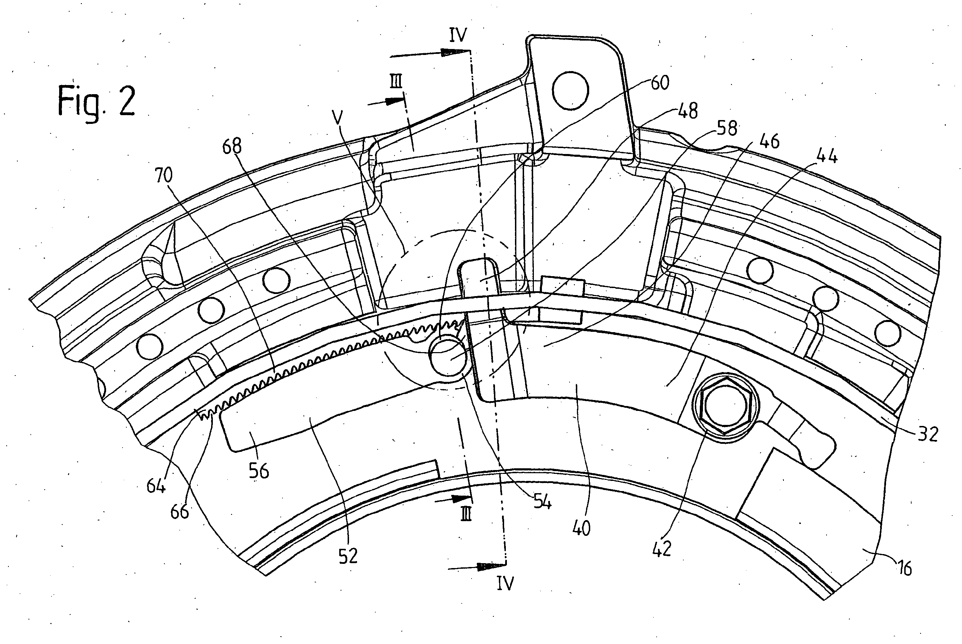

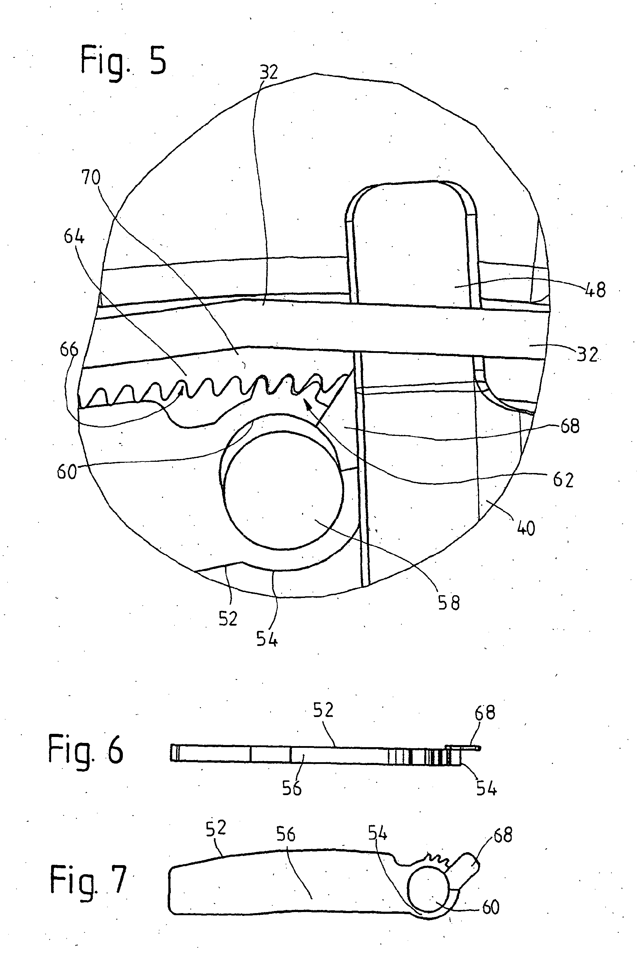

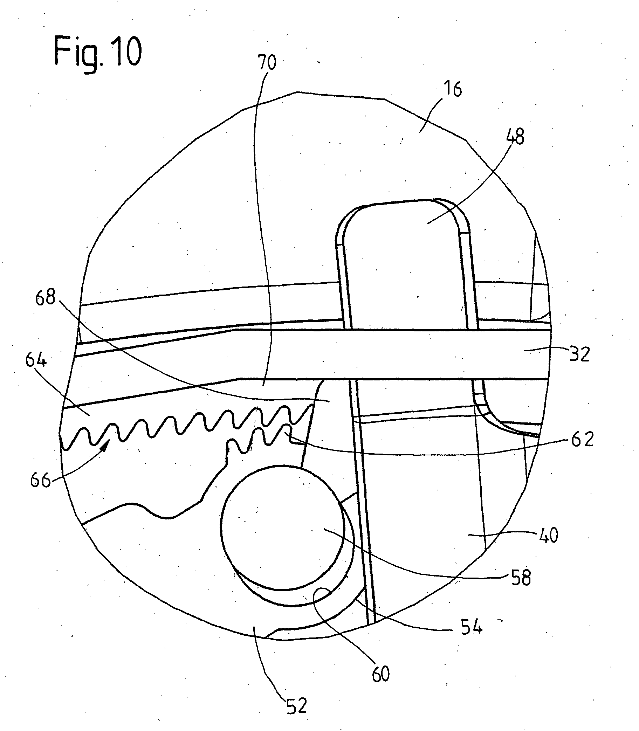

In Zuordnung zu dem Nachstellring 32 ist, wie man vor allem in den Fig. 1 und 2 erkennt, ein Stellelement 52 vorgesehen. Dieses weist einen kopfartigen Lagerungsbereich 54 und von diesem in Umfangsrichtung ausgehend einen Hebelabschnitt 56 auf. An der Anpressplatte 16 ist ein im Wesentlichen axial sich erstreckender Trägerbolzen 58 vorgesehen, welcher eine langlochartige Öffnung 60 im Lagerungsabschnitt 54 des Stellelements 52 durchsetzt. Wie man in Fig. 2 erkennt, ist diese langlochartige Öffnung näherungsweise in radialer Richtung langgestreckt. An dem kopfartigen Lagerungsabschnitt 54 ist, wie man vor allem auch in der vergrößerten Detailansicht der Fig. 5 erkennen kann, eine Stellverzahnung 62 ausgebildet. An einer Innenseite eines keilartig ausgebildeten Blockierelements 64 ist eine Gegen-Stellverzahnung 66 ausgebildet. Diese ist in der in den Fig. 2 und 5 erkennbaren ersten Schiebeendlage des Stellelements 52 bezüglich des Trägerbolzens 58 in Kämmeingriff mit der Stellverzahnung 62. Verschiebt sich ausgehend von der in der Fig. 5 dargestellten ersten Schiebeendlage das Stellelement 54 in die in der Fig. 10 erkennbare zweite Schiebeendlage, so tritt die Stellverzahnung 62 außer Kämmeingriff mit der Gegen-Stellverzahnung 66.

An dem Stellelement 52 ist ferner am Lagerungsabschnitt 54 desselben ein Arretiervorsprung 68 ausgebildet. Dieser kann, wie vor allem auch in den Fig. 3 und 5 erkennbar, zwischen dem sich näherungsweise radial erstreckenden Erfassungsabschnitt 48 des Verschleißerfassungselements 40 und einer axialen Stirnseite 70 des keilschieberartig ausgebildeten Blockierelements 64 geklemmt werden. Dieses Blockierelement 64, welches sich entlang der Innenseite des Nachstellrings 32 erstreckt und unter dem Erfassungsabschnitt 48 des Verschleißerfassungselements 40 hindurchgreift, weist ferner einen Kopplungsabschnitt 72 auf, welcher in eine zugeordnete Kopplungsaussparung 74 des Nachstellrings 32 im Wesentlichen umfangsbewegungsspielfrei eingreift, so dass das Blockierelement 64 mit dem Nachstellring 32 zur Bewegung in Umfangsrichtung gekoppelt ist.

Nachfolgend wird die Funktionsweise der Druckplattenbaugruppe 10 bei Durchführung einer Verschleißkompensation beschrieben. Es sei zunächst hierzu angenommen, dass in den Fig. 1 bis 5 ein Zustand dargestellt ist, in welchem kein Verschleiß vorliegt oder bereits zuvor Verschleiß kompensiert worden ist. Die Stellverzahnung 62 ist dann im Drehbetrieb der Druckplattenbaugruppe in Kämmeingriff mit der Stellverzahnung 66, da durch Fliehkrafteinwirkung das Stellelement 62 in seinem Lagerungsabschnitt 54 in die erste Schiebeendlage vorgespannt ist. Ferner liegt der Hebelabschnitt 56 an der Innenseite des Blockierelements 64, also der Gegen-Stellverzahnung 66 desselben an, so dass eine weitere Verschwenkung nicht möglich ist. Weiter ist der Arretiervorsprung 68 zwischen dem Blockierelement 64 und dem Erfassungsabschnitt 48 des Verschleißerfassungselements 40 geklemmt. Vor allem durch den Kämmeingriff zwischen der Stellverzahnung 62 und der Gegen-Stellverzahnung 66 und die Tatsache, dass das Stellelement 52 nicht weiter schwenken kann, ist das Blockierelement 64 gegen Bewegung in Umfangsrichtung blockiert, wodurch auch der Nachstellring 32 gegen Bewegung in Umfangsrichtung blockiert ist. Einen Beitrag zu dieser Blockierung kann auch das unter Vorspannung auf dem Blockierelement 64, nämlich unter Zwischenlagerung des Arretiervorsprungs 68, aufliegende Verschleißerfassungselement 40 liefern, wobei hinsichtlich der Blockierung gegen Drehbewegung des Nachstellrings 32 dieser Kraftbeitrag unbedeutend ist und in dieser Phase der wesentliche Beitrag des Verschleißerfassungselements 40 im Arretieren des Stellelements 52 gegen Bewegung von der ersten Schiebeendlage (siehe Fig. 5) in die zweite Schiebeendlage (siehe Fig. 10) liegt.

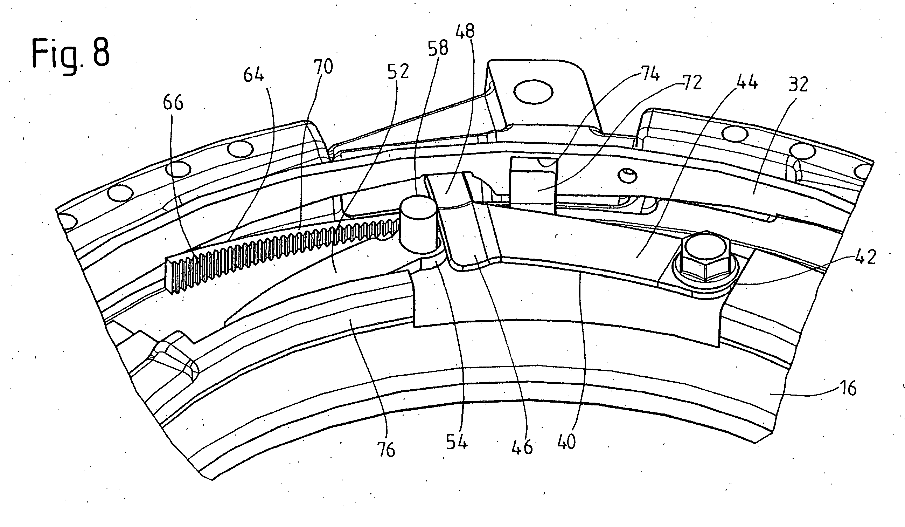

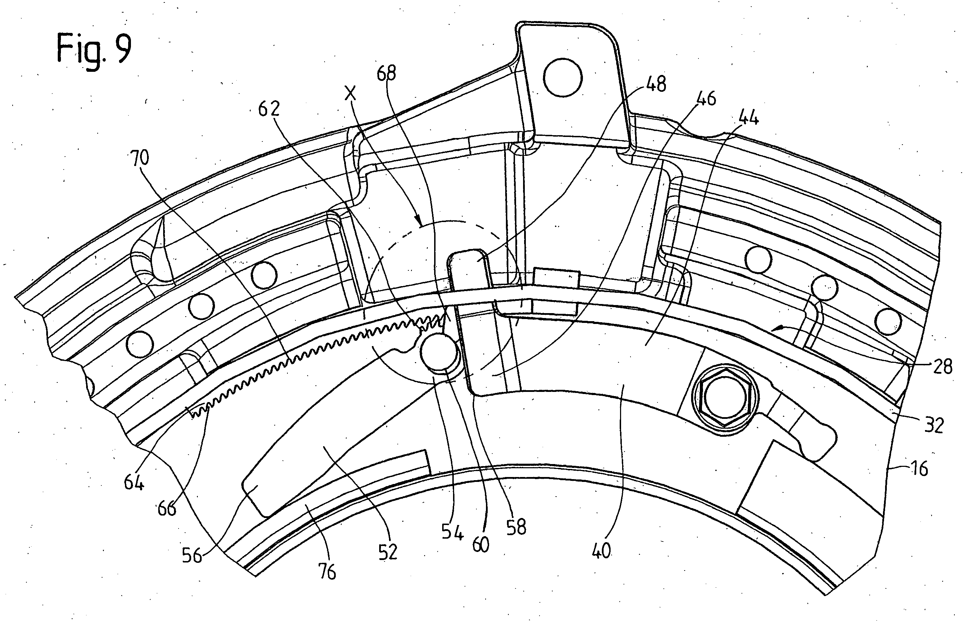

Tritt nun Verschleiß auf, so bleibt, wie vorangehend bereits angesprochen, der Erfassungsabschnitt 48 am Gegen-Erfassungselement 50 hängen. Das Verschleißerfassungselement 40 bewegt sich in seinem Endbereich 46 dann von der Anpressplatte 16 weg, was zur Folge hat, dass auch die Klemmeinspannung des Arretiervorsprungs 68 aufgehoben ist. Somit ist das Stellelement 52 nicht mehr in der beispielsweise in Fig. 5 erkennbaren Lage arretiert, wobei jedoch zunächst im Drehbetrieb allein durch Fliehkraftbeaufschlagung das Stellelement 52 mit seiner Stellverzahnung 62 in Kämmeingriff mit der Gegen-Stellverzahnung 66 gehalten ist. Kommt nachfolgend das Fahrzeug zum Stillstand und bleibt die im Allgemeinen mit näherungsweise horizontal orientierter Drehachse angeordnete Druckplattenbaugruppe in einer Drehlage stehen, in welcher der Trägerbolzen 58 oben positioniert ist, d. h. in einem Bereich über der Drehachse positioniert ist, so kann aufgrund der Tatsache, dass die vorangehend angesprochene Einspannung des Arretiervorsprungs 68 nicht mehr vorhanden ist, und weiterhin aufgrund der Tatsache, dass auch keine Fliehkrafteinwirkung mehr vorhanden ist, das Stellelement 62 durch Übergang in die in Fig. 10 dargestellte zweite Schiebeendlage außer Kämmeingriff mit dem Blockierelement 62 gelangen. Sobald die Stellverzahnung 62 nicht mehr in Eingriff mit der Gegen-Stellverzahnung 66 ist, kann entweder bei Erreichen der zweiten Schiebeendlage oder beim Übergang in die zweite Schiebeendlage unter der Schwerkrafteinwirkung und bedingt durch das Bereitstellen des Hebelabschnitts 56 am Stellelement 52 dieses auch um den Trägerbolzen 58 verschwenken, so dass nunmehr der Hebelabschnitt 56 von der Innenseite des Blockierelements 64 wegbewegt ist, bis er beispielsweise an einem an der Anpressplatte 16 vorgesehenen Anschlag 76 zur Anlage kommt. Das Stellelement 52 ist dann weiterhin in der zweiten Schiebeendlage und in einer in den Fig. 8 und 9 gut erkennbaren Stellbewegungsvorbereitungsschwenklage.

Wird nachfolgend wieder der Drehbetrieb aufgenommen, so wird sich das Stellelement 52 unter der Fliehkrafteinwirkung zunächst geringfügig nach radial außen bewegen, so dass der Lagerungsabschnitt 54 desselben sich auf dem Trägerbolzen 58 verschieben wird und somit der Kämmeingriff zwischen der Stellverzahnung 62 und der Gegen-Stellverzahnung 66 wieder hergestellt wird. Sobald dieser Kämmeingriff vorhanden ist, kann das Stellelement 52 sich nicht weiter radial verlagern, sondern wird unter der Fliehkrafteinwirkung eine Schwenkbewegung durchführen, bei welcher ein Übergang von der beispielsweise in Fig. 9 erkennbaren Stellbewegungsvorbereitungsschwenklage in Richtung zu der beispielsweise in Fig. 2 erkennbaren Stellbewegungsendschwenklage, in welcher der Hebelabschnitt 56 wieder an der Innenseite des Blockierelements 64 anliegt, auftritt. Während der Schwenkbewegung wird das Blockierelement 64 zur Bewegung in Umfangsrichtung angetrieben, wodurch über dieses als Stellkraftübertragungselement wirksame Blockierelement 64 dann auch der Nachstellring 32 zur Umfangsbewegung angetrieben wird und somit zu der vorangehend bereits angesprochenen Verschleißkompensation führen wird. Da der Nachstellring 32 grundsätzlich zwischen der Anpressplatte 16 und dem Kraftspeicher 22 eingespannt ist, kann dieser Stellvorgang nur dann auftreten, wenn eine Kraftbeaufschlagung durch den Kraftspeicher 22 nicht vorhanden ist, also beispielsweise dann, wenn die Druckplattenbaugruppe 10 bzw. eine diese aufweisende Reibungskupplung in einem Ausrückzustand gehalten ist oder in einen Ausrückzustand gebracht wird.

Es sei darauf hingewiesen, dass auch durch andere Freilaufkonstruktionen die vorangehend beschriebene Funktion erlangt werden kann. So kann z.B. eine Sperrklinke eingesetzt werden, die bei Verschwenkung nach radial innen, beispielsweise unter Schwerkrafteinwirkung, über eine Verzahnung rutscht und somit keine Sperrwirkung hat, während sie bei Verschwenkung nach außen, beispielsweise unter Fliehkrafteinwirkung, eine Sperrfunktion erfüllt und den Nachstellring 32 weiterschiebt.

Bei Durchführung dieses Stellvorgangs bewegt sich das keilartig ausgebildete Blockierelement 64 mit einem dicker werdenden Längenabschnitt desselben in den Bereich zwischen der Anpressplatte 16 und dem Erfassungsabschnitt 48 des Verschleißnachstellelements 40. Ist der zuvor aufgetretene Verschleiß in ausreichendem Ausmaß kompensiert worden, so wird bei Durchführung dieses Stellvorgangs oder am Ende des Stellvorgangs der Arretiervorsprung 68 am Stellelement 52 wieder zwischen dem Blockierelement 64 und dem Erfassungselement 40 geklemmt, so dass auch das Stellelement 52 wieder gegen Bewegung arretiert ist. Diese Arretierung kann dann, wenn nur sehr wenig Verschleiß aufgetreten ist, bereits erfolgen, bevor die in der Fig. 2 erkennbare Stellbewegungsendschwenklage erreicht ist. Auch in diesem Zustand ist dann eine weitere Bewegung des Erfassungselements 52 nicht möglich. Dieses wird sich in die in der Fig. 2 erkennbare Stellbewegungsendschwenklage erst dann bewegen können, wenn erneut Verschleiß aufgetreten ist und durch Bewegung des Verschleißerfassungsabschnitts 48 bezüglich der Anpressplatte 16 die Arretierklemmwirkung des Arretiervorsprungs 68 wieder aufgehoben worden ist.

Hat die Verschwenkbewegung des Stellelements 52 und die dabei auch auftretende Verschiebebewegung des Blockierelmeents 64 und des Nachstellrings 32 noch nicht zu einer ausreichenden Verschleißkompensation geführt, so wird bei Erreichen der Stellbewegungsendschwenklage (siehe Fig. 2) der Arretiervorsprung 68 noch nicht zwischen dem Blockierelement 64 und dem Verschleißerfassungselement 40 eingeklemmt sein. Dies bedeutet, dass dann, wenn erneut ein Zustand auftritt, in welchem die Druckplattenbaugruppe 10 sich nicht um die Drehachse A dreht und das Erfassungselement 52 in einem oberen Bereich positioniert ist, dieses schwerkraftbedingt sich wieder in die zweite Schiebeendlage bewegen kann, wobei die Stellverzahnung 62 wieder außer Eingriff mit der Gegen-Stellverzahnung 66 gelangt und somit das Stellelement 52 wieder in die in der Fig. 9 beispielsweise erkennbare Stellbewegungsvorbereitungsschwenklage gelangen kann. Beim nachfolgenden Übergang in einen Drehzustand und einen Ausrückzustand der Kupplung tritt erneut eine Stellbewegung auf, während deren Verlauf dann entweder der zuvor sensierte Verschleiß ausreichend kompensiert wird, oder nicht kompensiert wird, so dass nachfolgend erneut die vorangehende Prozedur durchgeführt wird.

Man erkennt aus der vorangehenden Beschreibung, dass bei der in den Fig. 1 bis 10 dargestellten erfindungsgemäßen Druckplattenbaugruppe 10 eine Kraftbeaufschlagung auf den Nachstellring 32 nur dann vorhanden ist, wenn tatsächlich eine Verschleißnachstellung vorgenommen werden soll. Es ist keine permanente Vorspannung vorhanden. Aufgrund dessen ist es auch nicht erforderlich, beispielsweise durch das Verschleißerfassungselement 40 eine permanente Gegenkraft zu erzeugen, die eine ungewünschte Bewegung des Nachstellrings verhindert. Vielmehr kann das Verschleißerfassungselement 40 mit vergleichsweise geringer Vorspannung bereitgestellt werden, so dass dessen Anschlagen am Gegen-Erfassungselement 50 nicht zu einer Beeinträchtigung der Kupplungscharakteristik führt.

Der Übergang des Erfassungselements 52 von der ersten Schiebeendlage in die zweite Schiebeendlage bei Vorliegen von Verschleiß wird, wie vorangehend bereits erwähnt, dann, wenn das System in einen nicht rotierenden Zustand gelangt, auftreten, wenn der Trägerbolzen 58 und somit das Stellelement 52 in einen Bereich über der Drehachse positioniert sind. Die durch Schwerkraft induzierte Verlagerung in die zweite Schiebeendlage wird auftreten, wenn der Trägerbolzen 48 - bezogen auf eine die Drehachse schneidende Vertikallinie - in einem Winkelbereich von etwa +/- 60° liegt.

Das heißt, in etwa 30% der Positionen, die die Druckplattenbaugruppe im Stillstand einnehmen wird, wird diese Verlagerung auftreten können, so dass nach jedem dritten bis vierten Anhalten des Systems die erforderliche Verschleißkompensation stattfinden kann. Um dafür zu sorgen, dass bei jedem Anhalten zuverlässig das Stellelement 52 in die zweite Schiebeendlage gelangen kann, wenn zuvor Verschleiß aufgetreten ist, kann eine Vorspannfedervorgesehen sein, beispielsweise Blattfeder, Schraubendruckfeder oder dergleichen, die das Stellelement 52 in Richtung zur zweiten Schiebeendlage vorspannt und ggf. auch in Richtung zur Stellbewegungsvorbereitungsschwenklage vorspännt.

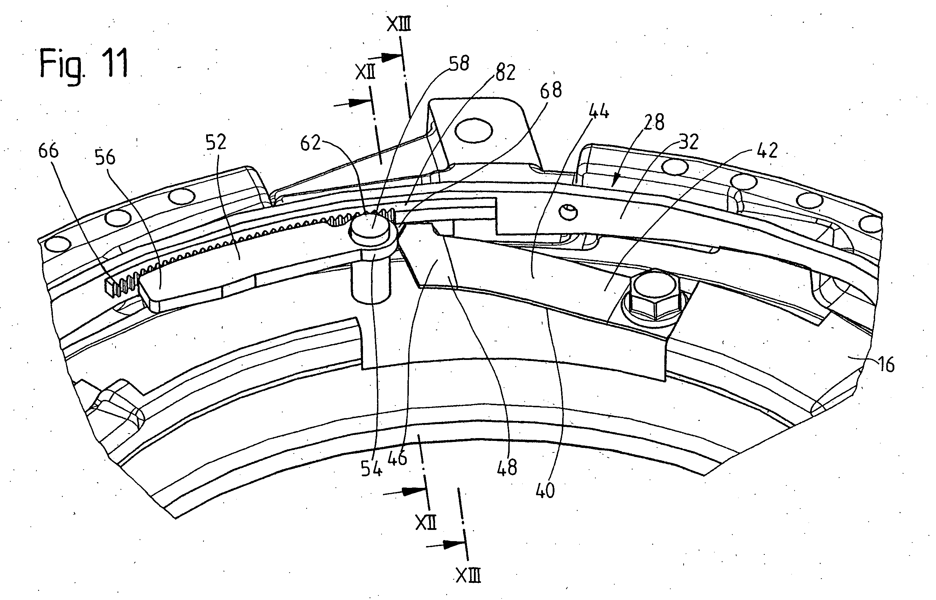

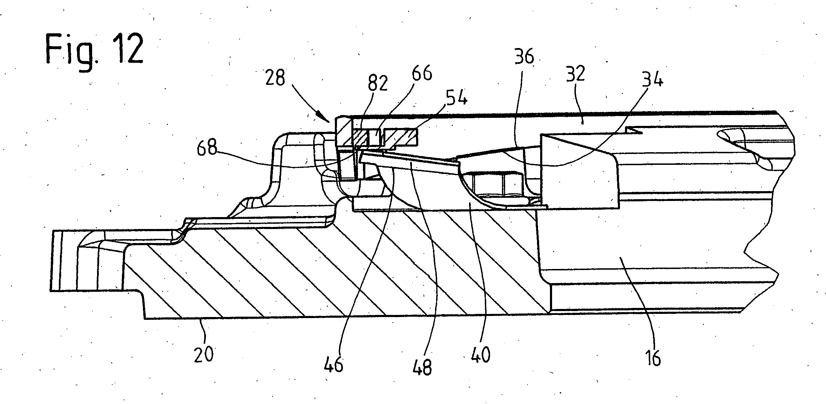

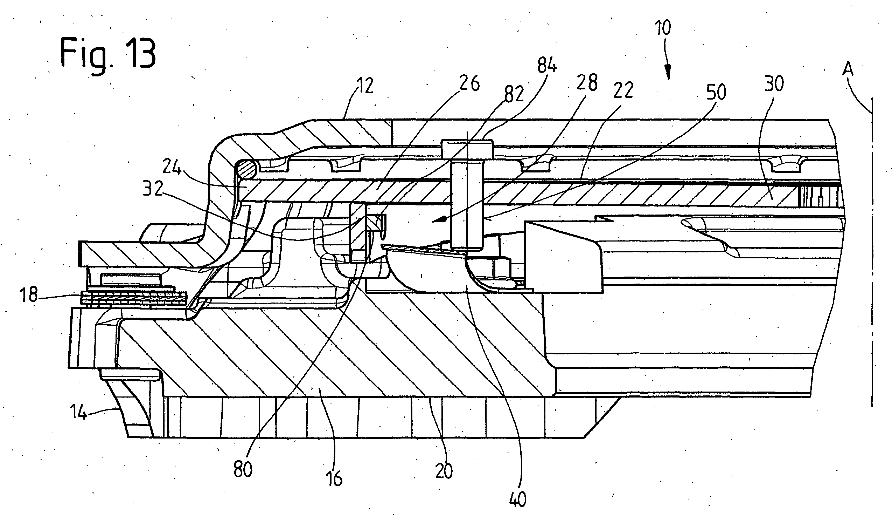

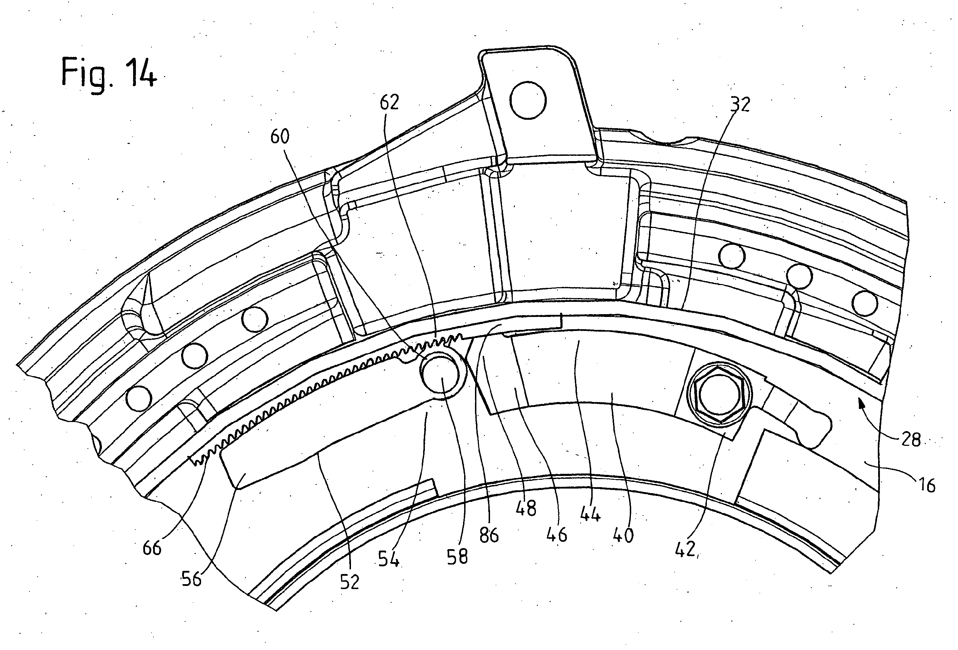

Eine alternativ ausgestaltete erfindungsgemäße Druckplattenbaugruppe ist in den Fig. 11 bis 14 gezeigt. Komponenten; welche vorangehend beschriebenen Komponenten entsprechen, sind mit den gleichen Bezugszeichen bezeichnet.

Man erkennt zunächst, dass auch hier das Stellelement 52 in der vorangehend beschriebenen Art und Weise an einem an der Anpressplatte 16 vorgesehenen Trägerbolzen 58 in seinem Lagerungsabschnitt 54 schwenkschiebbar getragen ist. An diesem Lagerungsabschnitt 54 weist das Stellelement 52 wieder die Stellverzahnung 62 auf. An der Innenseite des Nachstellrings 32 ist, entweder integral ausgebildet oder an einem separaten und daran festgelegten Abschnitt vorgesehen, die Gegen-Stellverzahnung 66 vorgesehen. Am Lagerungsabschnitt 54 des Stellelements 62 ist weiterhin der Arretiervorsprung 68 vorgesehen, der nunmehr zwischen einer der Anpressplatte 16 zugewandten Stirnseite 80 des auch die Verzahnung 66 bereitstellenden Abschnitts 82 und dem mit diesem Abschnitt 82 sich radial überlappenden Endbereich 46 des Verschleißerfassungselements 40 einklemmbar ist. Ein an dem Kraftspeicher 22 vorgesehener Bolzen 84 bildet nunmehr das Gegen-Erfassungselement 50, welches mit dem Verschleißerfassungselement 40 nunmehr mit dem im Endbereich 46 desselben und radial innerhalb des Nachstellrings 32 vorgesehenen Erfassungsabschnitt 48 zusammenwirkt. Dies bedeutet also, dass in der in den Fig. 11 bis 14 dargestellten Ausgestaltungsvariante das Verschleißerfassungselement 40 den Nachstellring 32 radial nicht mehr übergreift.

In Fig. 11 ist der Zustand dargestellt, den diese Druckplattenbaugruppe aufweist, wenn kein Verschleiß vorliegt oder ein Verschleiß bereits kompensiert worden ist. Das Stellelement 52 ist durch Einklemmen des Arretierabschnitts 68 zwischen dem Endbereich 46 des Verschleißerfassungselements 40 und dem Abschnitt 82 gegen Verschwenkung und Verschiebung blockiert. Die Stellverzahnung 62 ist mit der Gegen-Stellverzahnung 66 in Kämmeingriff, so dass auch durch Anlage des Hebelabschnitts 56 an der Stellverzahnung 66 bzw. dem diese aufweisenden Abschnitt 82 der Nachstellring 32 gegen Drehung im Sinne einer Nächstellbewegung blockiert ist. Da der Hebelabschnitt 56 fliehkraftbedingt nach radial außen vorgespannt ist, wird auch in Zusammenwirkung mit der zwischen den Rampenflächen 34 und den Gegen-Rampenflächen 36 generierten Reibwirkung eine Drehung des Nachstellrings 32 in entgegengesetzte Richtung nicht auftreten können.

Tritt bei diesem System dann Verschleiß auf, so verlagert sich der Kraftspeicher 22 der Axialbewegung der Anpressplatte 16 folgend mit seinem radial inneren Bereich in Richtung auf die Anpressplatte zu. Dabei kommt der Bolzen 84 in Anlage am Erfassungsabschnitt 48 des Verschleißerfassungselements 40 und drückt dieses mit seinem Endbereich 46 in Richtung auf die Anpressplatte 16 zu. Dabei gibt das Verschleißerfassungselement 40 den Arretiervorsprung 68 des Stellelements 52 frei. Kommt das System wieder zum Stillstand, so kann schwerkraftbedingt das nicht mehr arretierte Stellelement 52 in seine zweite Schiebeendlage bzw. die Stellbewegungsvorbereitungsschwenklage gelangen.

Nimmt das System seinen Drehbetrieb dann wieder auf, so wird fliehkraftbedingt das Stellelement 52 wieder in die erste Schiebeendlage gelangen und wird dann eine Schwenkbewegung durchführen, bei welcher durch den Kämmeingriff der Verzahnungen 62, 66 der Nachstellring 32 dann zur Durchführung einer Nachstellbewegung angetrieben wird. Da dieser Übergang in die erste Schiebeendlage und darauf folgend das Verschwenken beispielsweise bis zur Stellbewegungsendschwenklage nur auftreten kann, wenn der Arretiervorsprung 68 nicht zwischen dem Verschleißnachstellelement 40 und dem Abschnitt 82 geklemmt ist, wird dieser Übergang dann auftreten, wenn das Verschleißnachstellelement 40 durch den Bolzen 84 so beaufschlagt ist, dass es die angesprochene Klemmwirkung nicht erzeugen kann. Dies wird ein Zustand sein, bei welchem beim Übergang in einen Einrückzustand der Kraftspeicher 22 den Nachstellring 32 noch nicht so stark beaufschlagt, dass er in Umfangsrichtung nicht gedreht werden kann, oder bei Durchführung eines Ausrückvorgangs in entsprechender Weise bereits die Beaufschlagung des Nachstellrings 32 gemindert ist, gleichwohl jedoch der Bolzen 84 noch so nahe an der Anpressplatte 16 ist, dass er das Verschleißerfassungselement 40 ausreichend weit von dem Abschnitt 82 weg bewegen kann.

Es sei darauf hingewiesen, dass selbstverständlich auch bei der in den Fig. 11 bis 14 gezeigten Ausgestaltungsform das Stellelement 52 durch eine Federanordnung in Richtung zur zweiten Schiebeendlage bzw. zur Stellbewegungsvorbereitungsschwenklage vorgespannt sein kann.

Bei den vorangehend beschriebenen Ausgestaltungsformen umfasst die Verschleißnachstellvorrichtung als Nachstellelement den Nachstellring 32, welcher an zugeordneten Gegen-Rampenflächen der Anpressplatte 16 abgleiten kann. Es sei darauf hingewiesen, dass selbstverständlich auch zwei Nachstellringe vorgesehen sein können, von welchen einer sich bezüglich der Anpressplatte 16 abstützt und der andere durch den Kraftspeicher 22 beaufschlagt ist, wobei diese beiden Ringe dann einander zugewandt orientierte Rampenflächen bzw. Gegen-Rampenflächen aufweisen. Einer der Ringe kann dann drehfest gehalten sein, während der andere die vorangehend beschriebene Nachstellbewegung durchführt. Auch können an Stelle eines geschlossenen Rings, der durch ein einziges Stellelement 52 aktivierbar ist, einzelne Schieber vorgesehen sein, wobei in Zuordnung zu jedem Schieber dann ein separates Stellelement 52 bereitgehalten werden kann.

## Patentansprüche

1. Druckplattenbaugruppe für eine Reibungskupplung, umfassend eine Gehäuseanordnung (12), eine in der Gehäuseanordnung (12) vorgesehene und mit dieser um eine Drehachse drehbare Anpressplatte (16), eine Kraftbeaufschlagungsanordnung (22), vorzugsweise Kraftspeicher, welche bezüglich der Gehäuseanordnung (12) der Anpressplatte (16) abstützbar ist, eine Verschleißnachstellvorrichtung (28) im Kraftübertragungsweg zwischen der Kraftbeaufschlagungsanordnung (22) und der Anpressplatte (16), umfassend wenigstens ein zur Verschleißnachstellung bewegbares Verschleißnachstellelement (32), wobei dem wenigstens einen Verschleißnachstellelement (32) ein Stellelement (52) zugeordnet ist, welches bei Durchführung einer Stellbewegung das wenigstens eine Verschleißnachstellelement (32) zur Durchführung einer Verschleißnachstellung zur Bewegung antreibt, wobei das dem wenigstens einen Verschleißnachstellelement (32) zugeordnete Stellelement (52) durch Fliehkrafteinwirkung zur Durchführung einer Stellbewegung beaufschlagbar ist.

2. Druckplattenbaugruppe nach Anspruch 1,
**dadurch gekennzeichnet, dass** das Stellelement (52) eine Stellverzahnung (62) aufweist, die zur Durchführung einer Verschleißnachstellung in Kämmeingriff mit einer Gegen-Stellverzahnung (66) an dem zugeordneten Verschleißnachstellelement (32) oder einem damit gekoppelten Stellkraftübertragungselement (64) steht.

3. Druckplattenbaugruppe nach Anspruch 2,
**dadurch gekennzeichnet, dass** der Kämmeingriff der Stellverzahnung (62) mit der Gegen-Stellverzahnung (66) lösbar ist.

4. Druckplattenbaugruppe nach einem der Ansprüche 1 bis 3,
**dadurch gekennzeichnet, dass** das Stellelement (62) an der Anpressplatte (16) schwenkschiebbar getragen ist.

5. Druckplattenbaugruppe nach Anspruch 3 und Anspruch 4,
**dadurch gekennzeichnet, dass** in einer ersten Schiebeendlage die Stellverzahnung (62) in Eingriff mit der Gegen-Stellverzahnung (66) steht und dass in einer zweiten Schiebeendlage die Stellverzahnung (62) außer Eingriff mit der Gegen-Stellverzahnung (66) ist.

6. Druckplattenbaugruppe nach Anspruch 5,
**dadurch gekennzeichnet, dass** das Stellelement (52) durch Schwerkrafteinwirkung oder/und Federvorspannung von der ersten Schiebeendlage in die zweite Schiebeendlage bringbar ist.

7. Druckplattenbaugruppe nach Anspruch 5 oder Anspruch 6,
**dadurch gekennzeichnet, dass** eine Arretiereinrichtung (68, 40, 64; 68, 40, 82) vorgesehen ist, welche eine Bewegung des Stellelements (52) von der ersten Schiebeendlage zur zweiten Schiebeendlage nur nach Auftreten von Verschleiß zulässt.

8. Druckplattenbaugruppe nach Anspruch 7,
**dadurch gekennzeichnet, dass** die Arretiereinrichtung (68, 40, 64; 68, 40, 82) einen Arretierabschnitt (62) an dem Stellelement (52) umfasst, welcher bei Auftreten von Verschleiß freigebbar ist und bei nicht vorhandenem Verschleiß und bei kompensiertem Verschleiß durch eine Klemmanordnung (40, 64; 40, 82) zur Arretierung des Stellelements (52) in der ersten Schiebeendlage klemmbar ist.

9. Druckplattenbaugruppe nach einem der Ansprüche 5 bis 8,
**dadurch gekennzeichnet, dass** das Stellelement (52) durch Fliehkrafteinwirkung von der zweiten Schiebeendlage in die erste Schiebeendlage bringbar ist.

10. Druckplattenbaugruppe nach einem der Ansprüche 5 bis 9,
**dadurch gekennzeichnet, dass** in der oder/und bei Übergang in die zweite Schiebeendlage das Stellelement (52) in eine Stellbewegungsvorbereitungsschwenklage verschwenkbar ist.

11. Druckplattenbaugruppe nach Anspruch 10,
**dadurch gekennzeichnet, dass** das Stellelement (52) durch Schwerkrafteinwirkung oder/und Federvorspannung in die Stellbewegungsvorbereitungsschwenklage verschwenkbar ist.

12. Druckplattenbaugruppe nach Anspruch 10 oder Anspruch 11,
**dadurch gekennzeichnet, dass** das Stellelement (52) durch Fliehkrafteinwirkung ausgehend von der Stellbewegungsvorbereitungsschwenklage zum Durchführen einer Stellbewegung in Richtung einer Stellbewegungsendschwenklage verschwenkbar ist.

13. Druckplattenbaugruppe nach einem der Ansprüche 1 bis 12,
**dadurch gekennzeichnet, dass** an der Anpressplatte (16) wenigstens ein Verschleißerfassungselement (40) vorgesehen ist, welches bei Auftreten von Verschleiß wenigstens bereichsweise bezüglich der Anpressplatte (16) verlagerbar ist.

14. Druckplattenbaugruppe nach Anspruch 8 und Anspruch 13,
**dadurch gekennzeichnet, dass** das Verschleißerfassungselement (40) wenigstens einen Teil der Klemmanordnung (40, 64; 40, 82) bildet.

15. Druckplattenbaugruppe nach Anspruch 13 oder Anspruch 14,
**dadurch gekennzeichnet, dass** dem Verschleißerfassungselement (40) ein Blockierelement (64) zugeordnet ist, welches nach Auftreten von Verschleiß und wenigstens bereichsweiser Verlagerung des Verschleißerfassungselements (40) bezüglich der Anpressplatte (16) ein Zurückbewegen des Verschleißerfassungselements (40) bezüglich der Anpressplatte (16) wenigstens teilweise verhindert.

16. Druckplattenbaugruppe nach Anspruch 15,
**dadurch gekennzeichnet, dass** das Blockierelement (64) einen keilartigen Blockierschieber (64) umfasst.

17. Druckplattenbaugruppe nach Anspruch 2 und Anspruch 15 oder 16,
**dadurch gekennzeichnet, dass** das Stellkraftübertragungselement (64) das Blockierelement (64) bildet.

18. Druckplattenbaugruppe nach einem der Ansprüche 13 bis 17,
**dadurch gekennzeichnet, dass** das Verschleißerfassungselement (40) das Auftreten von Verschleiß durch Zusammenwirken mit einem an der Gehäuseanordnung (12) vorgesehenen Gegen-Erfassungsbereich (50, 51) erfasst.

19. Druckplattenbaugruppe nach einem der Ansprüche 13 bis 17,
**dadurch gekennzeichnet, dass** das Verschleißerfassungselement (40) das Auftreten von Verschleiß durch Zusammenwirken mit einem an der Kraftbeaufschlagungsanordnung (22) vorgesehenen Gegen-Erfassungsbereich (50, 84) erfasst.

20. Reibungskupplung, umfassend eine Druckplattenbaugruppe (10) nach einem der vorhergehenden Ansprüche.
